# EUROPEAN PATENT SPECIFICATION

(11) **EP 0 877 861 B1**
(45) Date of publication and mention of the grant of the patent: **07.08.2002**
(21) Application number: 97901734.0
(22) Date of filing: 31.01.1997
(51) Int. Cl.: F03B 13/08, E02B 9/06

(54) **HYDROELECTRIC POWER GENERATION PLANT**
HYDROELEKTRISCHE STROMVERSORGUNGSANLAGE
GROUPE D'ALIMENTATION HYDROELECTRIQUE

(30) Priority: 31.01.1996 GB 9601989; 31.01.1996 GB 9601990
(43) Date of publication of application: 18.11.1998
(73) Proprietor: PIESOLD, David, Daniel, August, London SW1E 6HR (GB); Caro, Colin Gerald, London SW7 2AZ (GB)
(72) Inventor: PIESOLD, David, Daniel, August, London SW1E 6HR (GB); Caro, Colin Gerald, London SW7 2AZ (GB)
(74) Representative: Piésold, Alexander J.
(86) International application number: GB9700277
(87) International publication number: WO9728367

(56) References cited:
- CH-A- 589 178
- FR-A- 1 419 840
- US-A- 4 408 452
- US-A- 5 167 483
- L.QUANTZ: "Wasserkraftmaschinen" 1954 , SPRINGER VERLAG , BERLIN XP002030159 see page 26; figures

## Description

The present invention relates to a hydroelectric power generation plant.

In a hydroelectric plant, water from a storage area such as a reservoir or a river diversion system flows through an intake, which may be provided with screens to prevent the ingress of foreign matter, into a penstock. The penstock directs water under pressure towards a turbine, which is turned by the water to generate electricity. The water then flows out of the plant through a tailrace (e.g. US-A-5 167 483).

Types of turbine in common use are known as Francis, Kaplan, Pelton and Bulb or through-flow turbines. Francis or Kaplan types are normally arranged with their shafts vertical and have a spiral casing which receives horizontally inflowing water and directs the water radially inwardly to the rotating runner vanes. The water imparts driving torque to the vanes and emerges in a vertically downwardly flowing direction. It flows into the tailrace, which normally includes an expanding passage known as a draft tube. Because the draft tube expands in the downstream direction, the pressure at the exit from the runner vanes is reduced below atmosphere, effectively sucking water through the turbine. Pressure head is thus recovered in the draft tube, improving energy efficiency.

A straight conical draft tube of sufficient length would require a lot of space and, in general, expensive excavation. It is therefore usual to form the draft tube in an elbow shape, having a vertical portion below the turbine and an upwardly sloping portion downstream thereof.

The use of an elbow shaped draft tube downstream of the turbine, whilst saving space, has certain disadvantages. The pressure at the inside of the curve is reduced, with a resultant tendency for flow to separate from the inner wall of the curve, leading to energy losses caused by eddying turbulence. The flow separation may also result in cavitation at the inner wall, which can damage the pipe and reduce its useful working life.

Usually a number of turbines are provided together in a so-called turbine hall. As the water flows under gravity, it is necessary to construct the turbine hall at a lower height than the storage area, either underground or below the surface of a dam. If the turbine hall is located relatively near the water storage area, the penstock then extends vertically or has a substantial downward gradient. A sharp elbow curve is then required at the lower end of the penstock to change the direction of flow to the horizontal direction preferred for the turbine. Using such a curve can create a number of disadvantages.

Firstly, as explained above in relation to the draft tube, the pressure at the inside of the curve is reduced, leading to flow separation and energy losses caused by eddying turbulence. Moreover, there may be problems with cavitation. These effects can be reduced by increasing the radius of the curve, but this entails placing the turbine hall further from the water storage area and an increase in the overall length of the penstock, leading to energy losses due to pipe friction.

Further, the velocity profile of the flow through the curved downstream end of the penstock becomes skewed, with a greater velocity of flow near the outer wall of the curve. It is known that hydroelectric turbines function better when the velocity profile is "blunt", or as uniform as possible, and the skewed velocity profile of the flow exiting the curved pipe leads to inefficient power generation from the turbine. To allow the flow to "recover" from its skewed velocity profile, it is usually necessary to provide a straight length of pipe between the end of the penstock and the turbine, known as a spacer pipe, which again increases the overall pipe length upstream of the turbine, with the potential for frictional energy losses.

The invention provides a hydroelectric power generation plant as defined in claim 1.

Because the tubular portion is curved in three dimensions, this tends to cause the development of swirl flow.

It has been found that under these circumstances, the axial velocity profile of the flow across the tubular portion becomes more uniform or "blunter", with the speed of flow at the outside of the curve being less than it would be in similar flow in a two-dimensional curved pipe, and the speed at the inside being greater. Thus the near wall velocity profile around the tubular portion tends to be circumferentially more uniform with its non-planar geometry than it would be with planar geometry. Such a flow has several advantages in the context of penstocks and tailraces.

Since the velocity profile of the flow is more uniform, there is a reduced tendency for separation to occur at the inner wall of the curve. This leads to reduced energy losses caused by eddying turbulence. There can thus be a reduced head loss in the penstock if it comprises a three-dimensional curved tubular portion, and a greater recovery of pressure head in the tailrace if it comprises such a tubular portion. Thus, providing either the penstock or the tailrace with a tubular portion curved in three dimensions can lead to more efficient power generation and significant economic benefits. Preferably, both the penstock and the tailrace comprise such a tubular portion, to obtain maximum benefits.

A further benefit of the reduced tendency for flow separation is a reduction in the likelihood of damage from cavitation. This applies both to the penstock and the tailrace.

Furthermore, because of the blunter velocity profile, fluid flowing in the tubular portion acts in the manner of a plunger, and tends to remove any debris, such as sand and silt, which may have been deposited on the wall of the pipe during low-speed flow (for example, during periods of low electrical load). This "plunger flow" means that the tubular portion is, to some extent, self-cleaning, which is advantageous.

The blunter velocity profile reduces abrasion at the outside of the curve by sand or silt, there being a reduced flow speed in this region.

The blunter velocity profile reduces the wall stresses of the tubular portion by avoiding bending stresses being added to hoop or ring tensions.

The above benefits apply both to the penstock and the tailrace.

With particular reference to the penstock, it is possible to position the turbine near to the water storage area without using a sharp, planar elbow curve, with its associated energy losses. By positioning the turbine near to the water storage area, the length of the penstock, in which water flows at high velocities, can be reduced at the expense of increasing the length of the tailrace, in which water flows at low velocities, with an overall energy benefit.

Further concerning the penstock, as the velocity profile is blunter, there is less need to provide a length of straight pipe upstream of the turbine in which the flow can "recover" from a skewed velocity profile. Thus a shorter length of straight pipe can be used and if this is done the penstock can be positioned nearer to the turbine, shortening the overall pipe length upstream of the turbine and thus giving energy savings.

The penstock may have a substantially straight portion and a said tubular portion, the tubular portion being provided between the straight portion of the penstock and the turbine. Thus the penstock may have a vertical or steeply sloping straight drop shaft, followed by the three dimensionally curved tubular portion downstream thereof. A straight length of spacer pipe may be provided between the tubular portion and the turbine, but this may not be necessary in view of the blunt velocity profile generated by the tubular portion.

Adjacent ends of the straight and tubular portions of the penstock may be substantially axially aligned. Alternatively, the tubular portion may branch off laterally from the straight portion. In such a case, the straight portion may have a substantially greater diameter than the tubular portion, with the likely situation that flow in the straight portion will be laminar and flow in the tubular portion will be turbulent. This arrangement would be suitable in hydroelectric schemes of modest size. More than one tubular portion may branch off the straight portion, each tubular portion feeding a respective turbine.

A penstock having a straight portion may have a tubular portion at the upstream end of the straight portion. Thus a planar curve at the upstream end can be avoided. The inlet to the upstream tubular portion may be a bellmouth. Alternatively, a bend at the upstream end of the straight portion can be avoided altogether by shaping a dam wall to be substantially perpendicular to the straight portion, a bellmouth then preferably being provided at the inlet to the straight portion.

As an alternative to the penstock including a straight portion, substantially the entire penstock may be formed by a tubular portion. Thus the inlet to the tubular portion will be provided at the reservoir and may for example be provided with a bellmouth.

Preferably, the or each tubular portion forms part of a helix. If the angle turned through is other than 360° or a multiple thereof, which will often be the case, the centre line of an inlet to the tubular portion and the centre line of an outlet of the tubular portion will lie in different planes. This is in contrast to the centre lines of the inlet and outlet of a conventional two dimensionally curved pipe, which lie in the same plane.

If the tailrace comprises a tubular portion curving in three dimensions, further energy savings can be obtained, because of the reduced tendency for flow separation. Flow separation can be further reduced if the tailrace tubular portion increases in cross-sectional area in the downstream direction.

In certain preferred embodiments, the direction of curvature of the tubular portion in a lateral direction (i.e. as viewed in plan) is the same as the direction of curvature in the inlet portion of the turbine. This can apply to the penstock and/or the tailrace.

In small hydroelectric schemes the diameter of the tubular portion forming the penstock or part of the penstock may be less than 0.5m. For larger schemes, the diameter will be greater than 0.5 or 1m or 2m or 3m or 4m or 5m or 6m or 7m. In one presently preferred embodiment, the diameter is 8m, although diameters greater than 8m are possible.

The turbine may be a reversible pump turbine. Such an arrangement is suitable for a pumped storage system. The energy savings provided by a three dimensionally curved tubular portion discussed above are also applicable when pumping. The savings can arise if such a tubular portion is provided either at the pump inlet or the pump outlet, but it is expected that maximum savings will be achieved by providing tubular portions at both the inlet and the outlet.

In certain pumped storage systems, the water may follow one path, via a turbine, to generate power, and another separate path, via a pump, at times when energy is to be stored. In these circumstances, the path via the pump can benefit from energy savings if either the inlet or the outlet to the pump are provided with a tubular portion which curves in three dimensions.

Preferred embodiments of the invention will now be described by way of example only and with reference to the accompanying drawings, in which:-
Figure 1 is a schematic cross-sectional view of part of a hydroelectric generation plant incorporating an embodiment of the invention;
Figure 2 is a schematic elevation view of the curved pipe at the end of the penstock of Figure 1, on a larger scale;
Figure 3 is a view along the arrows III-III in Figure 1 at the same scale as Figure 2;
Figure 4 is a cross-sectional view of a dam incorporating pipework according to the invention, on the lines IV-IV of Figure 5;
Figure 5 is a schematic plan view of the pipework of Figure 4;
Figure 6 is a schematic perspective view of the pipework of Figure 4;
Figure 7 is a schematic plan view of the invention applied to a further hydroelectric power generation plant;
Figure 8 is a schematic elevational view of the pipework shown in Figure 7;
Figure 9 is a schematic perspective view of the pipework of Figure 7;
Figure 10 is a schematic cross-sectional view of a dam showing a conventional penstock design;
Figure 11 is a schematic cross-sectional view of a dam having a penstock according to the invention;
Figure 12 is a schematic plan view of a penstock suitable for use in the dam of Figure 11;
Figure 13 is a schematic side elevation of the penstock of Figure 12;
Figure 14 is a schematic underneath plan view of a draft tube;
Figure 15 is a schematic side elevation of the draft tube of Figure 14; and

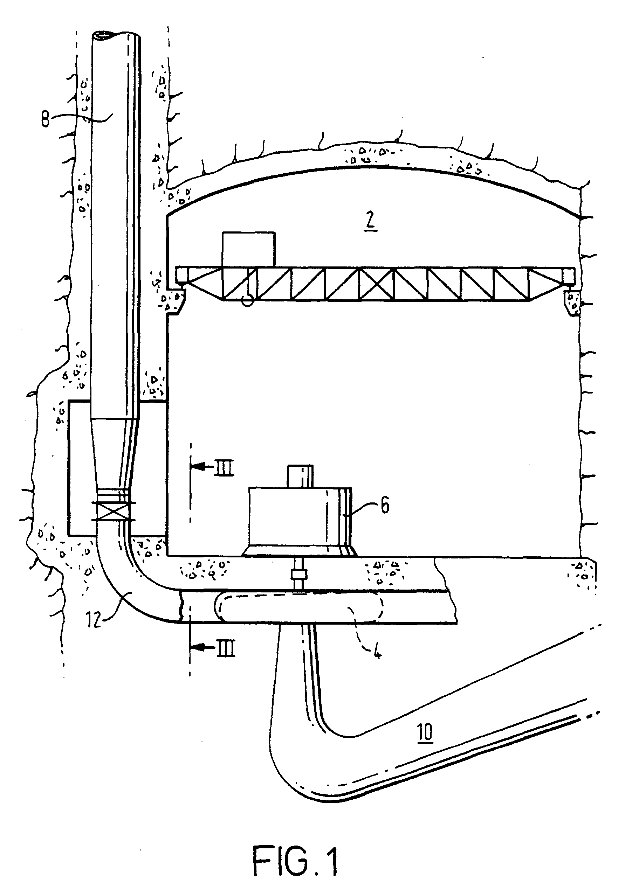

Figure 1 shows part of a hydroelectric generation plant, of the type with an underground turbine hall 2 fed from a water storage area. The turbine hall contains turbines 4 and generators 6, although only one of each is shown for clarity. A penstock 8 connects the water storage area with the turbine hall, and water which has driven the turbines flows into a tailrace 10 and away from the plant.

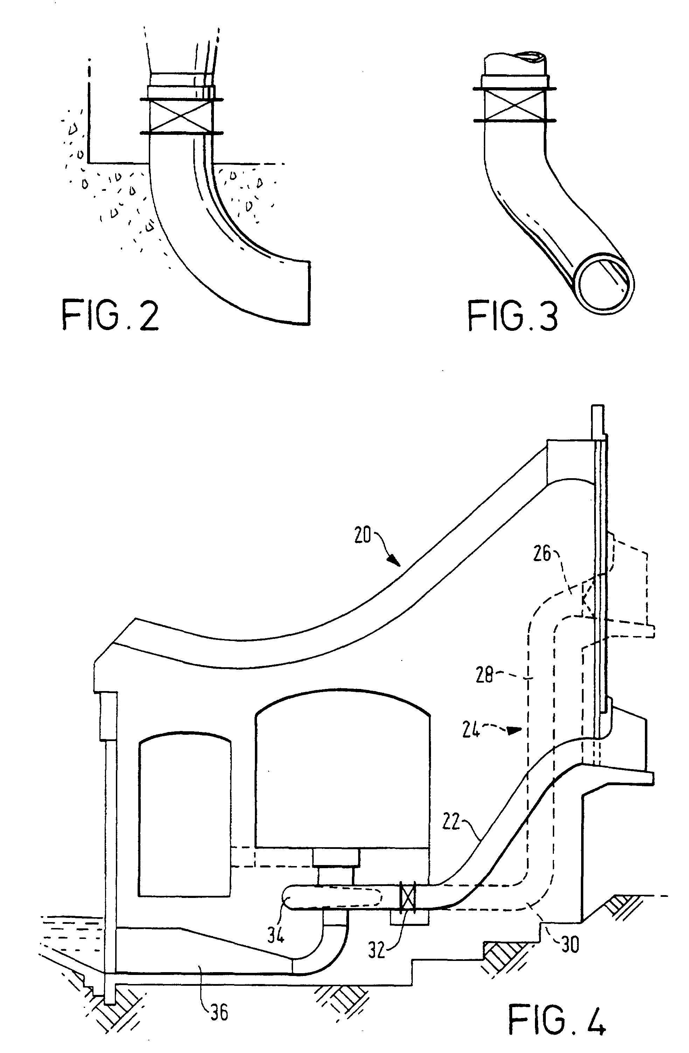

At the lower end of the penstock 8 is a tubular portion 12, formed so that it curves in three dimensions, as can be more clearly seen in Figures 2 and 3.

In use, as water flows through the tubular portion 12, it follows a swirling path, and as described above, this produces a flow velocity profile different from that which would be produced by an intake duct curving in two dimensions only. The swirling flow, and the resulting variation in velocity profile, produces several advantages. In particular, the use of a duct which curves in three dimensions can lead to reduced head loss, and thus increase the overall efficiency of the plant. Further, it allows the turbine hall to be provided close to the water storage area, without the use of a planar elbow bend. In this case, the penstock shaft can be raise bored or excavated upwards, and the resulting debris can be removed through the already-excavated turbine hall.

Figures 4 to 6 illustrate the use of a helically curved tubular portion 22 as the penstock of a hydroelectric plant disposed inside a dam 20. The tubular portion 22 is connected to a turbine 34 via a valve 32. A tailrace 36 leads away from the turbine and discharges downstream of the dam 20.

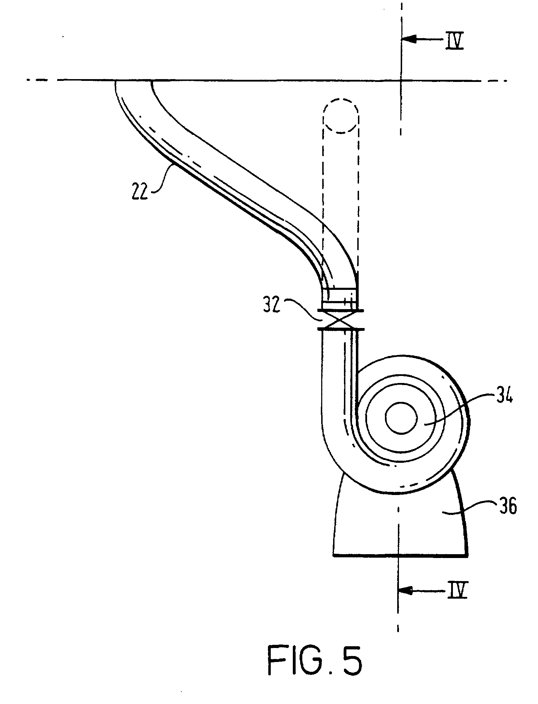

The tubular portion 22 of this preferred embodiment of the invention is shown in full lines, and a conventional penstock 24, having planar curves, is shown in dotted lines in Figures 4 and 5. For clarity purposes, the conventional penstock 24 is shown in Figure 4 with its entrance some way above the entrance to the tubular portion 22 of this embodiment of the invention, but in reality both entrances would be at the same height.

The conventional penstock 24 consists of a short horizontal section 26, a vertical section 28 and a lengthy horizontal section 30, which is connected via a valve 32 to the turbine 34. The horizontal section 30 must be long enough to allow the flow to "recover" from its skewed velocity profile, as discussed above. As a result, the penstock must be positioned some distance from the turbine hall, which limits the scope of possible designs for the plant. The sections 26, 28 and 30 are joined by planar 90° curves, known as "elbows", and these elbows introduce head losses. As the power generated by the turbine is dependent on the head which it is supplied with, any loss of head reduces the power generated and thus the overall efficiency of the plant.

The tubular portion 22 of the preferred embodiment of the invention is formed from a single three-dimensional curve. There are no sharp curves in the tubular portion, which helps to reduce head loss. It will be appreciated that even a very small reduction in head loss will lead to a very large increase in the amount of power generated during the life of the plant.

Further, as discussed above, the water in the tubular portion 22 follows a swirling path and has a blunter velocity profile, which obviates the need for a long straight section to allow the flow to "recover". This therefore allows greater freedom in positioning the penstock and the turbine.

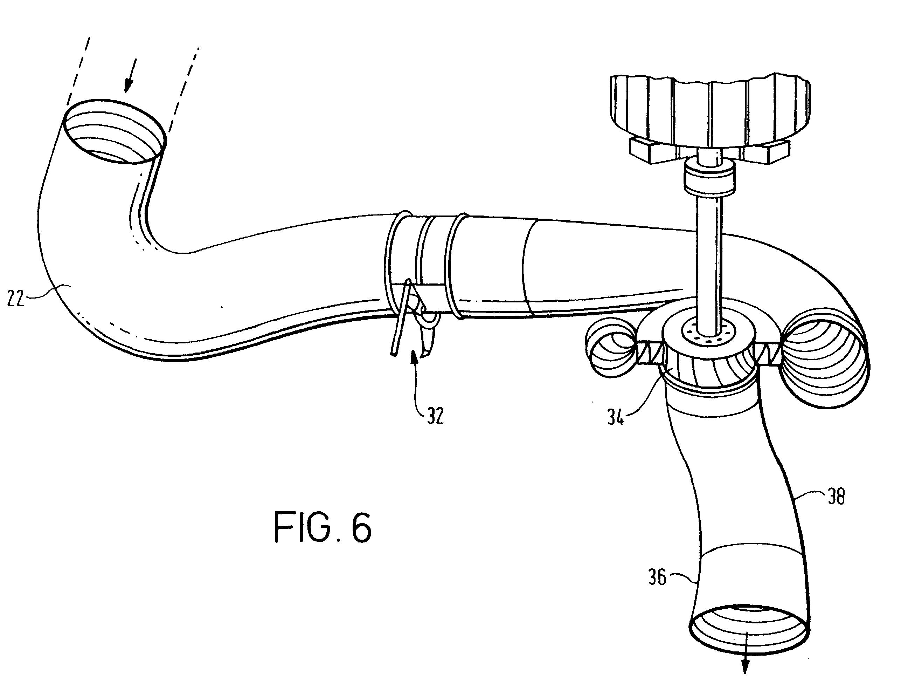

As shown in Figure 6, the tailrace 36 can also be formed with a three-dimensionally curved tubular portion 38. This can produce further energy savings and other advantages. Moreover, if the turbine is reversible, and can function as a pump when run in reverse (for example, for use in a pumped storage system), then it is advantageous to form the tailrace with a three-dimensional curve, so that the flow entering the turbine - now functioning as a pump - has a blunt velocity profile, with the various advantages discussed above.

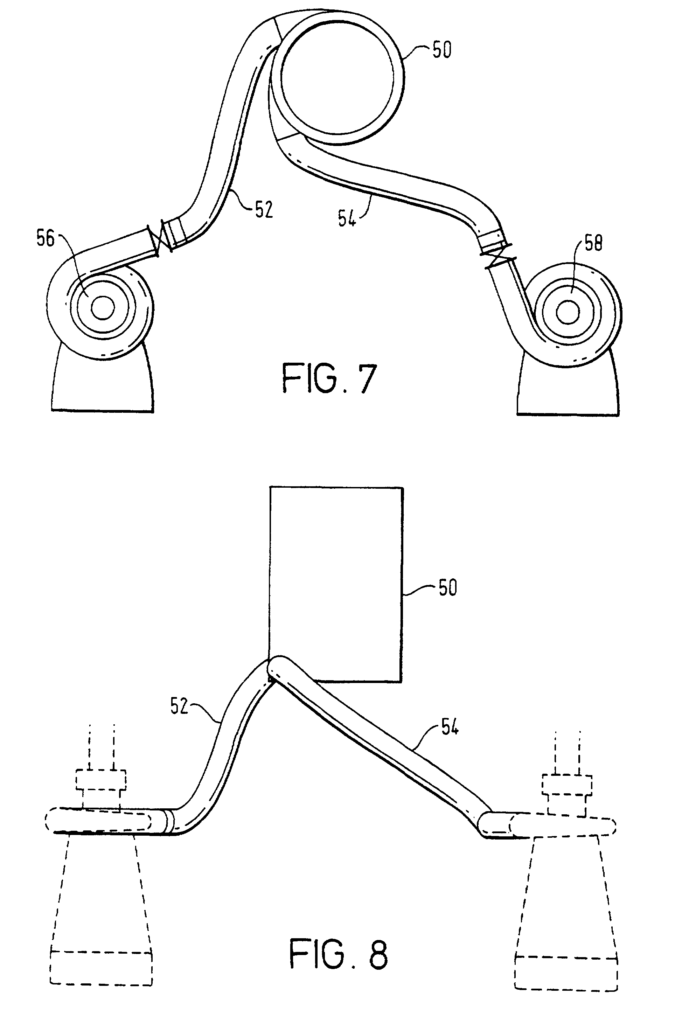

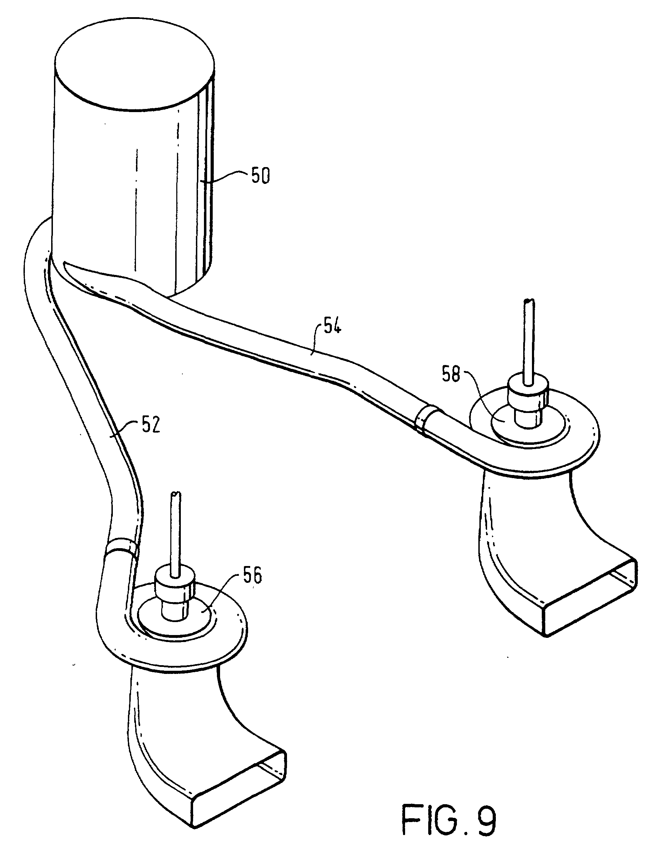

A further embodiment, more suited to smaller scale installations, is shown in Figures 7 to 9. In this case, a drop shaft 50 is provided for water, and two tubular portions 52, 54 of the penstock, curved in three dimensions, lead from the bottom of the drop tube to two turbines 56, 58. Each turbine is provided with a tailrace, each of which may also be formed with a three-dimensional curve.

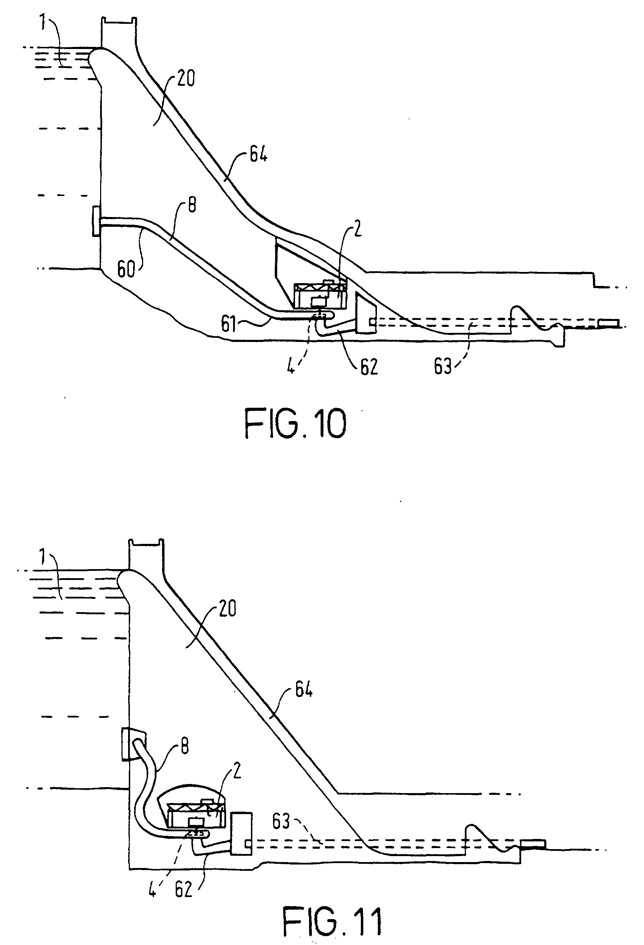

Figure 10 shows a conventional dam and penstock design. A turbine hall 2 containing turbines 4 (only one of which is shown) is disposed at a rearward location in the dam 20. A penstock 8 connects a reservoir 1 at the front of the dam 20 with the turbine 4, the penstock having two planar elbow bends 60 and 61, allowing water to enter the penstock in a horizontal direction at the upstream end and to enter the turbine in a horizontal direction at the downstream end. Downstream of the turbine a tailrace comprises a draft tube 62 and a horizontal tailrace tunnel 63. A spillway 64 is provided over the dam for releasing flood waters.

Figure 11 shows how the arrangement of Figure 10 is modified to incorporate a penstock 8 comprising a three-dimensionally curved tubular portion. It will be noted that the turbine hall 2 is located nearer to the front of the dam 20, such that the overall length of the penstock 8 is shorter than that of Figure 10, with a consequent reduction in frictional pipe losses. Although the length of the tailrace 63 has to be correspondingly increased, the water travels at lower velocities in the tailrace than in the penstock and frictional energy losses are consequently less.

If the arrangement of Figure 10 were modified by moving the turbine hall 2 to the position shown in Figure 11 whilst still retaining the elbow bends 60 and 61, the sharpness of the bends would increase with consequent energy losses. Such energy losses are compounded by the proximity of such bends, for example in the case of low head dams. The three-dimensionally curved penstock 8 of Figure 11 largely avoids such losses and reduces or eliminates flow separation.

Further benefits of the upstream location of the power station shown in Figure 11 are a deeper foundation cut-off depth at the upstream end of the dam, improving its ability to prevent leakage under the dam, and a reduction in vibration and leakage in the turbine hall if the spillway is sited above as shown.

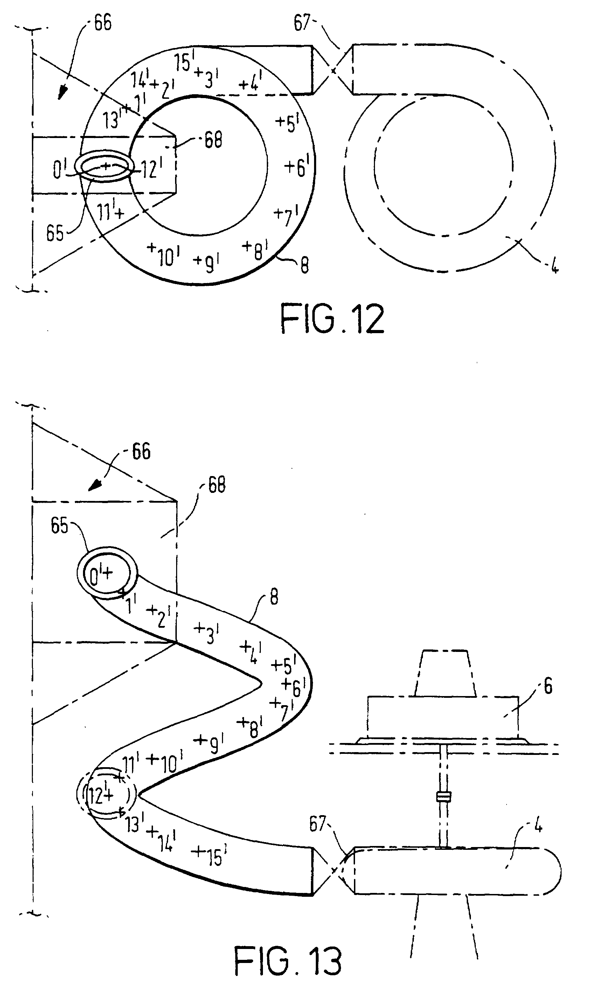

Figures 12 and 13 show a penstock suitable for use in the arrangement of Figure 11. The penstock 8 runs from a bellmouth inlet 65 at the dam wall to the turbine 4, which is connected to a generator 6. The penstock has a helical configuration and points 0',1' through to 15' are shown in both the plan and elevation views to assist understanding of the configuration. The dam wall is formed with a shaped, low velocity inlet chamber 66 and the bellmouth inlet 65 is arranged with its axis parallel to the main dam wall. The bellmouth inlet 65 opens out at an inclined wall 68 of the inlet chamber 66. Shown in dotted lines, at point 12' along the length of the penstock 8, is an alternative location for the bellmouth inlet 65, involving a net change of direction of the water flowing through the penstock of 90° as viewed in plan, rather than 450° for the version shown in solid lines. Using the alternative arrangement, the penstock portion between points 12' and 15' could be "stretched" in the vertical direction to provide for a bigger vertical drop whilst still providing the desired three-dimensional curve.

At the inlet 66 there are provided (not shown) course screens or trash racks and fine screens, to minimise ingress of solid particles to the penstock. There will also be main control gates together with an emergency drop gate and/or secondary control gates. At the downstream end of the penstock a rotary or butterfly valve 67 may optionally be provided as an alternative to secondary control gates at the dam wall inlet 66. If however the secondary control gates are provided, the downstream valve 67 may be omitted, advantageously reducing overall penstock length.

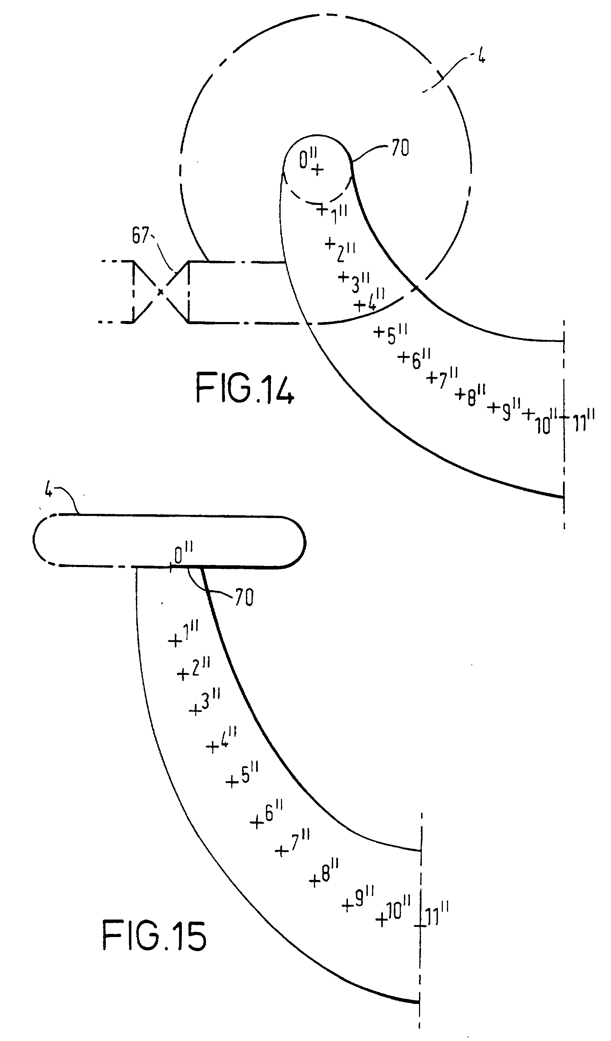

Figures 14 and 15 show an embodiment of a draft tube 62 in accordance with the invention, suitable for example for use in the arrangement of Figure 10. The draft tube 64 comprises a three-dimensionally curved tubular portion having an inlet 70 at the downstream (underneath) surface of the turbine 4. For ease of understanding of the arrangement, points 0",1" through to 11" are shown in both Figures 14 and 15. As well as curving in three-dimensions, the draft tube 64 increases in its cross-sectional area in the downstream direction, starting at its inlet 70. Downstream of point 11" the draft tube will continue to bend to carry the flow upwardly to the tailrace tunnel 63.

It will be noted that, in the penstock of Figures 12 and 13 and in the draft tube of Figures 14 and 15, the direction of curvature in the lateral direction (as seen in the plan views of Figures 12 and 14) is the same as the direction of curvature in the inlet portion of the turbine. Thus lateral curvature continues in the same sense.

Although the above description is in the context of certain layouts of hydroelectric plant, the three-dimensionally curved tubular portions can be used in penstocks and/or tailraces in other forms of hydroelectric generation plants or any similar situation.

## Claims

1. A hydroelectric power generation plant comprising a turbine, a penstock upstream of the turbine, and a tailrace downstream of the turbine, wherein the penstock comprises a tubular portion curving in three dimensions and being of substantially constant cross-sectional area along its length.

2. A hydroelectric power generation plant as claimed in claim 1, wherein the tubular portion of the penstock is constructed so as to involve a net change of direction of water flowing therethrough of 90°.

3. A hydroelectric power generation plant as claimed in claim 1 or 2, wherein the tailrace comprises a tubular portion curving in three dimensions.

4. A hydroelectric power generation plant as claimed in claim 1, 2 or 3, wherein the penstock has a substantially straight portion, and said tubular portion being provided between the straight portion of the penstock and the turbine.

5. A hydroelectric power generation plant as claimed in claim 4, wherein adjacent ends of the straight and tubular portions are substantially axially aligned.

6. A hydroelectric power generation plant as claimed in claim 4, wherein the tubular portion branches off laterally from the straight portion.

7. A hydroelectric power generation plant as claimed in claim 1, 2 or 3, wherein substantially the entire penstock is formed by a tubular portion curving in three dimensions and being of substantially constant cross-sectional area along its length.

8. A hydroelectric power generating plant as claimed in any preceding claim, wherein the tailrace comprises a tubular portion curving in three dimensions and increasing in cross-sectional area in the downstream direction.

9. A hydroelectric power generation plant as claimed in any preceding claim, wherein the tubular portion of the penstock forms part of a helix of constant radius.

10. A hydroelectric power generation plant as claimed in any preceding claim, wherein the turbine is a reversible pump turbine.

## Patentansprüche

1. Hydroelektrische Stromversorgungsanlage mit einer Turbine, einer Druckleitung oberhalb bzw. stromaufwärts von der Turbine und einem Ablauf bzw. Ablaß unterhalb bzw. stromabwärts von der Turbine, bei der die Druckleitung einen röhrenförmigen Abschnitt aufweist, der sich in drei Dimensionen krümmt und eine entlang dessen Länge im wesentlichen konstante Querschnittsfläche aufweist.

2. Hydroelektrische Stromversorgungsanlage nach Anspruch 1, bei der der röhrenförmige Abschnitt der Druckleitung so gestaltet ist, daß es zu einer sich ergebenden Richtungsänderung des durch diesen fließenden Wassers von 90° kommt.

3. Hydroelektrische Stromversorgungsanlage nach Anspruch 1 oder 2, bei der der Ablauf einen röhrenförmigen Abschnitt aufweist, der in drei Dimensionen gekrümmt bzw. gebogen ist.

4. Hydroelektrische Stromversorgungsanlage nach Anspruch 1, 2 oder 3, bei der die Druckleitung einen im wesentlichen geraden Abschnitt aufweist und der röhrenförmige Abschnitt zwischen dem geraden Abschnitt der Druckleitung und der Turbine vorgesehen ist.

5. Hydroelektrische Stromversorgungsanlage nach Anspruch 4, bei der angrenzende bzw. naheliegende Enden des geraden und des röhrenförmigen Abschnitts im wesentlichen axial ausgerichtet sind.

6. Hydroelektrische Stromversorgungsanlage nach Anspruch 4, bei der der röhrenförmige Abschnitt von dem geraden Abschnitt lateral abzweigt.

7. Hydroelektrische Stromversorgungsanlage nach Anspruch 1, 2 oder 3, bei der im wesentlichen die gesamte Druckleitung durch einen röhrenförmigen Abschnitt gebildet ist, der sich in drei Dimensionen krümmt und eine entlang dessen Länge im wesentlichen konstante Querschnittsfläche aufweist.

8. Hydroelektrische Stromversorgungsanlage nach einem der vorstehenden Ansprüche, bei der der Ablauf einen röhrenförmigen Abschnitt aufweist, der sich in drei Dimensionen krümmt und dessen Querschnittsfläche in der Richtung stromabwärts zunimmt.

9. Hydroelektrische Stromversorgungsanlage nach einem der vorstehenden Ansprüche, bei der der röhrenförmige Abschnitt der Druckleitung einen Teil einer Spirale bzw. Wendel mit konstantem Radius bildet.

10. Hydroelektrische Stromversorgungsanlage nach einem der vorstehenden Ansprüche, bei der die Turbine eine umkehrbare Turbinenpumpe bzw. Speicherpumpe ist.

## Revendications

1. Centrale de production d'énergie hydroélectrique comprenant une turbine, une conduite forcée en amont de la turbine, et une conduite de queue en aval de la turbine, la conduite forcée comprenant une partie tubulaire coudée dans trois dimensions et ayant une surface en coupe transversale essentiellement constante sur sa longueur.

2. Centrale de production d'énergie hydroélectrique selon la revendication 1, dans laquelle la partie tubulaire de la conduite forcée est agencée de manière à introduire un changement net de direction à 90° de l'eau qui circule en elle.

3. Centrale de production d'énergie hydroélectrique selon la revendication 1 ou 2, dans laquelle la conduite de queue comprend une partie tubulaire coudé dans trois dimensions.

4. Centrale de production d'énergie hydroélectrique selon la revendication 1, 2 ou 3, dans laquelle la conduite forcée comprend une partie essentiellement rectiligne, et ladite partie tubulaire est disposée entre la partie rectiligne de conduite forcée et la turbine.

5. Centrale de production d'énergie hydroélectrique selon la revendication 4, dans laquelle des extrémités adjacentes de la partie rectiligne et de la partie tubulaire sont alignées essentiellement axialement.

6. Centrale de production d'énergie hydroélectrique selon la revendication 4, dans laquelle la partie tubulaire s'étend en dérivation latéralement à partir de la partie rectiligne.

7. Centrale de production d'énergie hydroélectrique selon la revendication 1, 2 ou 3, dans laquelle essentiellement la totalité de la conduite forcée est formée par une partie tubulaire coudée dans trois dimensions et qui possède une section en coupe transversale essentiellement constante sur sa longueur.

8. Centrale de production d'énergie hydroélectrique selon l'une quelconque des revendications précédentes, dans laquelle la conduite de queue comprend une partie tubulaire coudée dans trois dimensions et dont la section en coupe transversale augmente en direction de l'aval.

9. Centrale de production d'énergie hydroélectrique selon l'une quelconque des revendications précédentes, dans laquelle la partie tubulaire de la conduite forcée fait partie d'une hélice à rayon constant.

10. Centrale de production d'énergie hydroélectrique selon l'une quelconque des revendications précédentes, dans laquelle la turbine est une pompe-turbine réversible.
